**Europäisches Patentamt**

**European Patent Office**

**Office européen des brevets**

(19)

(11) Veröffentlichungsnummer: **0 069 974**

**B1**

(12) # EUROPÄISCHE PATENTSCHRIFT

(45) Veröffentlichungstag der Patentschrift:
**25.01.89**

(21) Anmeldenummer: **82106041.5**

(22) Anmeldetag: **06.07.82**

(51) Int. Cl.⁴: **H 01 G 9/04**

(54) Verfahren zum Herstellen einer Elektrodenfolie für insbesondere Niedervolt-Elektrolytkondensatoren.

(30) Priorität: **09.07.81 DE 3127161**

(43) Veröffentlichungstag der Anmeldung:
**19.01.83 Patentblatt 83/3**

(45) Bekanntmachung des Hinweises auf die Patenterteilung:
**25.01.89 Patentblatt 89/4**

(84) Benannte Vertragsstaaten:
**DE FR IT**

(56) Entgegenhaltungen:
**DE-A-1 446 323**
**DE-C-914 042**
**FR-A-1 287 675**
**FR-A-1 521 952**
**GB-A-1 200 089**
**NL-B-41 490**

**CHEMICAL ABSTRACTS, Band 90, 1. Januar 1979,
Seite 297, Nr. 11101t, Columbus, Ohio, US; & SU - A
- 621 796 (K.P. BATASHEV u.a.) 30.08.1978**

(73) Patentinhaber: **Siemens Aktiengesellschaft Berlin
und München, Wittelsbacherplatz 2, D-8000
München 2 (DE)**

(72) Erfinder: **Löcher, Günter, Dipl.- Phys.,
Uhlandstrasse 14, D-7921 Nattheim (DE)**
Erfinder: **Sarkar, Harimohan, Dr. Dipl.- Phys., Carl-
Spitzweg- Strasse 20, D-7920 Heidenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Herstellen einer Elektrodenfolie für insbesondere Niedervolt-Elektrolytkondensatoren indem als Ausgangsmaterial Aluminiumfolie verwendet wird, wobei die Folie chemisch oder elektrochemisch gebeizt, anschließend in einer Chlorid-Ionen enthaltenen Ätzlösung aufgerauht, nach dem Aufrauhen in einer Nitrat-Ionen enthaltenen Lösung gereinigt und anschließend in destilliertem Wasser gespült wird.

Ein derartiges Verfahren ist aus der NL-B-41490 bekannt. Dort wird eine Ätzlösung aus Kupfer(II)chlorid vorgeschlagen. Die Verwendung von Kupfer als Kation führt hierbei zu unkontrollierten Ätzvorgängen, wobei in unerwünschter Weise Lochfraß auftreten kann.

Aus der GB-A-1 200 089 ist ein Verfahren zum Ätzen einer walzharten Aluminiumfolie bekannt, wobei die Ätzlösung AlCl$_3$ mit einem Borat/Sulfat-Zusatz enthalten kann. Eine Vorbehandlung der Folie vor dem Ätzen ist dort nicht beschrieben, so daß die Gefahr eines unkontrollierten Lochfraßes bei der Ätzung besteht. Ferner führt die dort vorgeschlagene Temperaturbehandlung vor der Ätzung zu einer Störung des Kristallgefüges, was sich ebenfalls ungünstig auswirkt.

Aus der DE-A-1 614 274 ist die Verwendung von walzharter Folie als Ausgangsmaterial bekannt, d. h. einer Folie, die vor der Verarbeitung nicht durch eine Temperaturbehandlung getempert wurde. Derartige Folien zeichnen sich dadurch aus, daß sich wesentlich höhere Aufrauhgrade als mit getemperter Folie erzielen lassen. Höhere Aufrauhgrade bedeuten aber höhere spezifische Kapazitäten, so daß sich mit höher aufgerauhten Elektrodenfolien Elektrolytkondensatoren kleinerer Abmessungen herstellen lassen.

Allerdings tritt bei der Verarbeitung walzharter Aluminiumfolien die Schwierigkeit auf, daß die mechanische Stabilität der geätzten Folie ungenügend ist. Die Aluminiumfolien sind derart spröde, daß eine wirtschaftliche Verarbeitung in der herkömmlichen Fertigung, d. h. in einem kontinuierlichen, kombinieren Ätz- und Formierbetrieb, nicht möglich ist.

So ist bei dem genannten Stand der Technik gemäß DE-A-1 614 274 vorgeschlagen worden, die Folie nach einer Beiz- jedoch vor der Ätzbehandlung einer thermischen Behandlung zu unterziehen. Dadurch wird jedoch ein kontinuierlicher Fertigungsprozeß unterbrochen und es tritt die Schwierigkeit auf, daß die thermisch zu behandelnde Folie nach dem Beizvorgang besonders gut gereinigt werden muß, damit durch die Temperaturbehandlung nicht unerwünschte oxidische Fehlstellen entstehen können.

Aufgabe der Erfindung ist es deshalb, ein Verfahren zum Herstellen einer Elektrodenfolie der eingangs genannten Art anzugeben, bei dem eine kostengünstige Herstellung der Folien mit hohem Aufrauhgrad und gleichzeitiger guter mechanischer Stabilität im kontinuierlichen Ätz- und Formierprozeß erreicht wird.

Diese Aufgabe wird erfindungsgemäß dadurch gelöst, daß eine walzharte Folie verwendet wird, die in einer Ätzlösung aufgerauht wird, die Aluminiumchlorid und zusätzlich Sulfat- und/oder Borat-Ionen enthält und anschließend einer Formierbehandlung unterzogen wird, daß die Folie vor Beendigung der Formierung einer Temperaturbehandlung unterzogen wird, und daß die elektrolytische Ätzung mit Gleichstrom der maximalen Welligkeit von 5 % erfolgt.

Zweckmäßige Weiterbildungen des erfindungsgemäßen Verfahrens sind in den Unteransprüchen angegeben.

Die Vorteile der Erfindung werden anhand der folgenden Ausführungsbeispiele näher erläutert.

Als Ausgangsmaterial wird dabei eine walzharte Aluminiumfolie der Reinheit 99,99 verwendet. Zur Erzielung einer gleichförmigen, für die folgende Ätzung aktiven Oberfläche wird die walzharte Aluminiumfolie unmittelbar vor dem Ätzen in einem Tank durch chemisches und/oder elektrochemisches Beizen von Walzrückständen und der natürlichen Oxidschicht befreit. Dieser Beizvorgang ist deshalb wichtig, weil Verunreinigungen auf der Oberfläche der Aluminiumfolien als "aktive" Stellen wirken, so daß die Folie bei der Ätzung an diesen Stellen bevorzugt angegriffen wird.

Die Beizung kann chemisch und/oder elektrochemisch erfolgen, wobei zum chemischen Beizen wäßrige Lösungen von Salzsäure, Schwefelsäure, Aluminium-Chlorid oder ein Gemisch von Phosphor- und Chromsäure geeignet sind. Bei der Verwendung von Phosphor- und Chromsäure ist nach dem Beizvorgang eine Spülung in destilliertem Wasser erforderlich, damit nicht unerwünschte Ionen in das Ätzbad verschleppt werden. Die Temperaturen der Beizlösungen können zwischen 30 und 100°C betragen, wobei die Behandlungsdauer zwischen 30 Sekunden und 10 Minuten variiert.

Für einen elektrochemischen Beizvorgang eignet sich beispielsweise eine wäßrige Chloridlösung, deren Kationen Aluminium sowie Alkali- oder Erdalkalielemente sein können. Es ist dabei mit einer Stromdichte zu beizen, die kleiner oder gleich der maximalen Passiv-Stromdichte des Aluminiums in der jeweiligen Lösung ist. Die Passiv-Stromdichte ist dabei als die Stromdichte definiert, die sich bei Anodenpotentialen unterhalb des Lochfraßpotentials des Aluminiums einstellt, so daß kein Lochfraß auftreten kann. Es wird somit eine Oberflächenreinigung bewirkt, ohne daß das Aluminium angegriffen wird, sondern nur die Verunreinigungen und ggf. eine Aluminiumoxid-Schicht (Luftoxid-Schicht, Oxidhydrate) entfernt wird. Die Passiv-Stromdichte ist dabei von der Chloridkonzentration der jeweiligen Beizlösung abhängig und nimmt mit steigender Temperatur zu. Für das elektrochemische Beizen sind Badtemperaturen nahe dem Kochpunkt, vorzugsweise 95°C, vorteilhaft, wobei die Behandlungsdauer eine bis zehn Minuten beträgt.

Nach dem Beizen wird die Aluminiumfolie, ggf. nach einer Zwischenspülung in destilliertem Wasser, elektrolytisch in einer Ätzlösung aufgerauht, die Aluminiumchlorid und zusätzlich Sulfat- und/oder Borat-Ionen enthält.

Die Temperatur des Ätzbades liegt zwischen 60 und 100°C vorzugsweise bei ca. 95°C. Die elektrolytische Ätzung erfolgt mit Gleichstrom (max. Welligkeit von 5 %) bei einer Ätzstromdichte von ca. 0,1 bis 1 A/cm². Die Ätzstromdichte richtet sich nach der vorgesehenen Nennspannung des Elektrolytkondensators. So sind für höhere Nennspannungen niedrigere Ätzstromdichten anzuwenden.

Nach dem Ätzen wird die aufgerauhte Aluminiumfolie in einer wäßrigen Lösung, die Nitrat-Ionen enthält, gespült. Dies ist erforderlich, damit anhaftende Chlorid-Ionen von der Aluminiumfolie entfernt werden; vorhandene Chloride beeinträchtigen nämlich die elektrischen Werte des Elektrolytkondensators in ungünster Weise. Die Temperatur der Spüllösung kann zwischen 40 und 100°C betragen, wobei zu beachten ist, daß mit zunehmender Temperatur und Behandlungsdauer die Aluminium-Abtragsrate in Abhängigkeit vom pH-Wert der jeweils eingesetzten Spüllösung zunimmt. Diese Parameter sind so zu wählen, daß der Aluminium-Abtrag während der Spülung höchstens 1 mg/cm² beträgt.

Anschließend wird die Aluminiumfolie noch in einem oder mehreren Arbeitsgängen mit vollentsalztem Wasser bei Temperaturen zwischen 15 und 40°C behandelt, damit auch letzte Reste der verwendeten Badlösungen entfernt werden.

Nach dem Passieren der Spülstufen durchläuft die Aluminiumfolie eine herkömmliche Formieranlage zum Aufbringen des Dielektrikums durch anodische Oxidation. Es ist möglich, die Folie vor Beendigung der Formierung einer Temperatur behandlung zu unterziehen, wodurch eine weitere Erhöhung der Biegefestigkeit erreicht wird.

In der folgenden Tabelle sind für erfindungsgemäß hergestellte Elektrodenfolie verschiedener Nenn-Formierspannungen ($U_N$ bzw. $U_F$) die dynamische Festigkeit, die Biegewechselanzahl (BW) sowie die gemessene spezifische Kapazität ($C_{eff}$), sowie der Kapazitätsgewinn gegenüber den üblichen Niedervolt-Elektrodenfolien angegeben

| $U_N$ V | $U_F$ V | Dyn.Gest. N x cm | BW | $C_{eff}$ uF/cm² | Kap.-Gewinn % |
|---|---|---|---|---|---|
| 7,5 | 12,5 | 12 | 45 | 25,0 | 33 |
| 25 | 40 | 12 | 39 | 7,5 | 33 |
| 63 | 97 | 8 | 15 | 2,22 | 25 |
| 100 | 152 | 6 | 15 | 0,92 | 13 |

Der Tabelle ist zu entnehmen, daß durch das erfindungsgemäße Verfahren mechanisch ausreichend verarbeitbare Elektrodenfolien erhalten werden, welche zusätzlich gegenüber den herkömmlichen vorgeglühten Folien Kapazitätserhöhungen von 13 bis 33 % aufweisen.

Das erfindungsgemäße Verfahren eignet sich in bevorzugter Weise dafür, als Wanderbadverfahren eingesetzt zu werden, wobei die walzharte Folie von einer Vorratsrolle abgewickelt wird, die verschiedenen Behandlungsbäder durchläuft und zum Schluß als fertigformierte Elektrodenfolie aufgewickelt wird, um später zu Elektrolytkondensatoren verarbeitet zu werden.

**Patentansprüche**

1. Verfahren zum Herstellen einer Elektrodenfolie für insbesondere Niedervolt-Elektrolytkondensatoren, indem als Ausgangsmaterial Aluminiumfolie verwendet wird, wobei die Folie chemisch oder elektrochemisch gebeizt, anschließend in einer Chlorid-Ionen enthaltenen Ätzlösung aufgerauht, nach dem Aufrauhen in einer Nitrat-Ionen enthaltenen Lösung gereinigt und anschließend in destilliertem Wasser gespült wird, dadurch gekennzeichnet, daß eine walzharte Folie verwendet wird, die in einer Ätzlösung aufgerauht wird, die Aluminiumchlorid und zusätzlich Sulfat- und/oder Borat-Ionen enthält und anschließend einer Formierbehandlung unterzogen wird, daß die Folie vor Beendigung der Formierung einer Temperaturbehandlung unterzogen wird, und daß die elektrolytische Ätzung mit Gleichstrom der maximalen Welligkeit von 5 % erfolgt.

2. Verfahren nach Anspruch 1, dadurch gekennzeichnet, daß die Folie in einer wäßrigen Lösung chemisch gebeizt wird, die Salzsäure und/oder Schwefelsäure oder ein Gemisch aus Phosphor-und Chromsäure enthält.

3. Verfahren nach Anspruch 1, dadurch gekennzeichnet, daß die Folie in einer wäßrigen Chloridlösung elektrochemisch gebeizt wird.

4. Verfahren nach einem der Ansprüche 1 bis 3, dadurch gekennzeichnet, daß die Temperatur des Ätzbades zwischen 60 und 100°C, vorzugsweise ca. 95°C beträgt.

5. Verfahren nach einem der Ansprüche 1 bis 4, dadurch gekennzeihcnet, daß die Ätzstromdichte ca. 0,1 bis 1 A/cm² beträgt.

## Claims

1. Method of making electrode toil, especially for low-voltage electrolytic capacitors, by using aluminium foil as starting material, the foil being chemically or electrochemically pickled, then roughened in an etching solution containing chloride ions, cleaned in a solution containing nitrate ions after roughening and then rinsed in distilled water, characterised in that an hard-rolled foil is used which is roughened in an etching solution which contains aluminium chloride and additionally sulphate and/or borate ions and is then subjected to a forming treatment, in that the foil is subjected to a temperature treatment before termination of the forming, and in that the electrolytic etching is carried out with direct current having a maximum ripple of 5 %.

2. Method according to Claim 1 characterised in that the foil is chemically pickled in an aqueous solution which contains hydrochloric acid and/or sulphuric acid or a mixture of phosphoric and chromic acid.

3. Method according to Claim 1, characterised in that the foil is electrochemically pickled in an aqueous chloride solution.

4. Method according to one of Claims 1 to 3, characterised in that the temperature of the etching bath is between 60 and 100° C, preferably approx. 95° C.

5. Method according to one of claims 1 to 4, characterised in that the etching current density is approx. 0.1 to 1 A/cm².

## Revendications

1. Procédé pour fabriquer une feuille pour électrode notamment pour des condensateurs électrolytiques à basse tension, moyennant l'utilisation d'une feuille d'aluminium comme matériau de départ, et selon lequel on décape la feuille par voie chimique ou électrochimique, puis on la rend rugueuse en la plaçant dans une solution corrosive contenant des ions chlorure, on la nettoie dans une solution contenant des ions nitrate, après l'avoir rendue rugueuse, et on la lave ensuite à l'eau distillée, caractérisé par le fait qu'on utilise une feuille fragilisée par laminage, qu'on rend rugueuse en la plaçant dans une solution corrosive contenant du chlorure d'aluminium et en outre des ions sulfate et/ou borate et qu'on soumet ensuite à un traitement de formage, qu'on soumet la feuille à un traitement thermique avant la fin du formage et que la corrosion électrolytique est réalisée avec un courant présentant une ondulation maximale de 5 %.

2. Procédé suivant la revendication 1, caractérisé par le fait qu'on décape chimiquement la feuille dans une solution aqueuse contenant de l'acide chlorhydrique et/ou de l'acide sulfurique ou un mélange d'acide phosphorique et d'acide chromique.

3. Procédé suivant la revendication 1, caractérisé par le fait qu'on décape la feuille par voie électrochimique dans une solution de chlorure agueuse.

4. Procédé suivant l'une des revendications 1 à 3, caractérisé par le fait que la température du bain de corrosion est comprise entre 60 et 100° C et est égale de préférence à environ 95° C.

5. Procédé suivant l'une des revendications 1 à 4, caractérisé par le fait que la densité du courant de corrosion est comprise entre environ 0,1 et 1 A/cm².